# EUROPÄISCHE PATENTSCHRIFT

(11) **EP 3 898 355 B1**
(45) Veröffentlichungstag und Bekanntmachung des Hinweises auf die Patenterteilung: **13.09.2023**
(21) Anmeldenummer: 19829042.1
(22) Anmeldetag: 12.12.2019
(51) Int. Cl.: B60S 3/04, B08B 1/00, B25J 11/00

(54) **ROBOTERWERKZEUG, ROBOTERANORDNUNG UND VERFAHREN ZUM BETREIBEN EINER ROBOTERANORDNUNG FÜR DAS REINIGEN VON FAHRZEUGOBERFLÄCHEN**
ROBOT TOOL, ROBOT ARRANGEMENT, AND METHOD FOR OPERATING A ROBOT ARRANGEMENT FOR CLEANING VEHICLE SURFACES
OUTIL DE ROBOT, AGENCEMENT DE ROBOT ET PROCÉDÉ POUR FAIRE FONCTIONNER UN AGENCEMENT DE ROBOT POUR LE NETTOYAGE DE SURFACES DE VÉHICULES

(30) Priorität: 20.12.2018 DE 102018222651
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: RÜHE, Sebastian Philipp, 38300 Wolfenbüttel (DE); OTREMBA, Maik, 38118 Braunschweig (DE)
(86) Internationale Anmeldenummer: PCT/EP2019/084917
(87) Internationale Veröffentlichungsnummer: WO 2020/126829

(56) Entgegenhaltungen:
- DE-A1- 10 110 373
- DE-A1-102014 112 123
- DE-A1-102016 009 585
- DE-U1-202017 004 032

## Beschreibung

Die Erfindung betrifft ein Roboterwerkzeug, eine Roboteranordnung und ein Verfahren zum Betreiben einer Roboteranordnung für das Reinigen von Fahrzeugoberflächen.

Im Rahmen einer zunehmenden Teil- und Vollautonomisierung des Fahrbetriebs von Fahrzeugen und insbesondere von Personenkraftwagen ergeben sich Möglichkeiten für neue Mobilitätskonzepte. Ein Beispiel sind autonome Fahrzeuge, die zur Personenbeförderung eingesetzt werden und in regelmäßigen Abständen gewartet und gereinigt werden. Hierbei ist es wünschenswert, wenn einige der dabei anfallenden Arbeiten zumindest teilweise automatisiert durchgeführt werden können.

In einem Fahrzeug befinden sich verschiedene Oberflächen, die zu reinigen sind. Hierbei handelt es sich insbesondere um Fensterflächen sowie um Fahrzeugflächen im Fahrzeuginnenraum, beispielsweise das Armaturenbrett. Für das Reinigen von Fensterflächen existieren bereits automatisierte Lösungen. Diese sind aber auf Anwendungen in Gebäuden beschränkt, in denen vergleichsweise große Fensterflächen vorhanden sind, die eben ausgebildet sind. In Fahrzeugen kommen hingegen gewölbte Fensterflächen zum Einsatz. Diese sind zudem vergleichsweise kleinflächig und über Rahmen, Säulen oder allgemeine Karosseriestrukturen voneinander getrennt. Am Markt erhältliche sogenannte Fensterputzroboter sind für das Reinigen gewölbter Flächen nicht ausgelegt und müssten zudem manuell zwischen den einzelnen Fensterflächen umgesetzt werden.

Soll Reinigungsflüssigkeit verwendet werden, kann es sich ferner als schwierig erweisen, diese zuverlässig wieder zu entfernen und ein Übertreten oder Heruntertropfen auf benachbarte Fahrzeugoberflächen zu vermeiden.

Aus der DE 101 10 373 A1 ist eine gattungsgemäße Lösung zum Reinigen von Innenräumen von Automobilen bekannt, bei der ein angetriebener Roboterarm ein Reinigungswerkzeug positioniert.

Die EP 1 705 087 A1 offenbart eine Fahrzeugwaschanlage mit Roboterarmen.

Eine Aufgabe der Erfindung ist es daher, das Reinigen von Fahrzeugoberflächen zu verbessern und insbesondere eine zuverlässige automatisierte Reinigung zu ermöglichen.

Diese Aufgabe wird durch ein Roboterwerkzeug mit den Merkmalen von Anspruch 1, eine Roboteranordnung mit den Merkmalen von Anspruch 6 sowie die Verfahren mit den Merkmalen des Anspruchs 7 gelöst.

Ein Grundgedanke der Erfindung besteht darin, ein Roboterwerkzeug bereitzustellen, das von einem Roboter relativ zu der zu reinigenden Fahrzeugoberfläche bewegbar ist und diese daher überstreichen kann (d.h. in Anlage hiermit stehen sowie entlang dieser bewegbar ist oder, mit anderen Worten, diese abwischen kann). Dabei ist das Roboterwerkzeug vorzugsweise zumindest teilweise nachgiebig (d.h. deformierbar) ausgebildet, um sich an die Kontur der Fahrzeugoberfläche anzupassen. Diese Nachgiebigkeit kann z.B. mittels formflexibler Reinigungselemente erreicht werden und/oder mittels gelenkig gelagerter Reinigungselemente.

Dabei erfolgt eine Reinigung der Fahrzeugoberfläche unter Verwenden einer Reinigungsflüssigkeit, wobei diese Reinigungsflüssigkeit ohne eine Gefahr des Verschmutzens benachbarter Fahrzeugoberflächen erfindungsgemäß wieder aufnehmbar bzw. absorbierbar ist.

Unter einem Roboter kann hierin eine vorzugsweise elektrisch angetriebene kinematische Einheit verstanden werden, die wenigstens eine, vorzugsweise wenigstens drei und beispielsweise bis zu sechs angetriebene und/oder individuell ansteuerbare Maschinenachsen oder ,mit anderen Worten, Gelenke umfasst. Der Roboter kann allgemein programmierbar sein und mittels Programmanweisungen vorgegebene Bewegungspfade abfahren. Bestandteil der Programmanweisungen kann auch sein, auf Sensorsignale zu reagieren und Bewegungsbahnen auf Basis aktueller Sensorsignale geeignet anzupassen. Gemäß einer Variante handelt es sich bei dem Roboter um einen Sechs-Achsen-Knickarm-Industrieroboter oder allgemein um einen Industrieroboter. Der Roboter kann fahrzeugexterne bzw. fahrzeugunabhängig ausgebildet und/oder bodenmontiert sein

Das Roboterwerkzeug kann als eine selektiv an den Roboter ankoppelbare und von diesem wieder abkoppelbare Einheit ausgebildet sein. Der Grundkörper des Roboterwerkzeugs kann eine Grundfläche des Roboterwerkzeugs definieren. Der Grundkörper kann die Roboterschnittstelle umfassen (oder hiermit verbunden sein) und/oder Schnittstellen zum selektiven An- und Abkoppeln des Reinigungselements umfassen. Der Grundkörper kann als ein tragendes Element des Roboterwerkzeugs dienen oder, anders ausgedrückt, als ein Tragrahmen. Der Grundkörper kann Metall oder Kunststoff umfassen.

Die Roboterschnittstelle kann mit dem Grundkörper verbunden (z.B. daran angeschraubt) oder einstückig hiermit ausgebildet sein. Die Roboterschnittstelle kann derart konfiguriert sein, dass sie an einem standardisierten Roboterflansch bzw. einer Roboterhand (insbesondere mechanisch) ankoppelbar ist. Alternativ oder zusätzlich kann die Ankopplung an einer sogenannten Schnellwechselkupplung des Roboters (vorzugsweise ebenfalls standardisiert) oder einer sogenannten Crashbox ermöglicht werden, die zwischen dem Roboterwerkzeug und Roboterflansch angeordnet ist. Letztere kann per Druckluft ein Kompensieren unerwünscht hoher und insbesondere stoßartiger Kräfte ermöglichen, die auf das Roboterwerkzeug einwirken.

Gemäß einem Beispiel ist der Roboter dazu eingerichtet, das Roboterwerkzeug um sämtliche sechs räumlichen Freiheitsgrade zu bewegen und somit frei im Raum zu positionieren und/oder zu orientieren. Dies gilt insbesondere relativ zu einer zu reinigenden Fahrzeugoberfläche. Allgemein kann vorgesehen sein, dass das Fahrzeug bzw. die Fahrzeugoberfläche still steht und sämtliche hierin erläuterten Relativbewegungen von dem Roboter ausgeführt werden.

Bei der Fahrzeugoberfläche handelt es sich vorzugsweise um eine Fensterfläche. Allgemein kann eine Reinigung der Innenseite einer entsprechenden Fensterfläche vorgesehen sein und/oder von dessen Außenseite hiervon.

Bei dem Reinigungselement kann es sich z.B. um ein Tuch, einen Schwamm, ein Kissen, einen Schaumstoffkörper oder ein allgemein (elastisch) deformierbares und/oder saugfähiges Material handeln. Die Formflexibilität bzw.Nachgiebigkeit des Reinigungselements kann derart bemessen sein, dass dieses unter einer von dem Roboter erzeugten Anpresskraft an die zu reinigende Fahrzeugoberfläche deformierbar ist. Unter Eigengewicht und vorzugsweise auch bei absorbierter Reinigungsflüssigkeit ist das Reinigungselement hingegen vorzugsweise formstabil.

Die Formflexibilität und/oder Nachgiebigkeit kann mit einer elastischen Deformierbarkeit einhergehen bzw. durch eine solche verursacht werden. Die Flüssigkeitsabsorption kann durch eine Saugfähigkeit des Reinigungselements (bzw. Aufsaugfähigkeit) bezüglich einer zu verwendenden Reinigungsflüssigkeit verursacht werden.

Durch Koppeln mit dem Grundkörper kann das Reinigungselement an diesem gehalten und gemeinsam mit diesem bewegt werden und insbesondere in Anlage mit einer Fahrzeugoberfläche gebracht und entlang dieser bewegt werden. Das Koppeln kann formschlüssig und/oder mechanisch erfolgen z.B. über hierfür vorgesehene Schnittstellen. Das Reinigungselement kann selektiv mit dem Grundkörper gekoppelt oder entkoppelt werden, was optional auch automatisch (d.h. ohne manuelles Eingreifen) erfolgen kann. Dies ist beispielsweise dann relevant, wenn automatisch zwischen zu verwendenden Reinigungselementen gewechselt werden soll. In diesem Fall kann das Roboterwerkzeug in einen Reinigungselement-Wechselbereich einer Roboter-Arbeitszelle bewegt werden und ein mit dem Grundkörper gekoppeltes Reinigungselement kann entkoppelt und ein anderes, noch nicht mit dem Grundkörper gekoppeltes Reinigungselement kann hiermit gekoppelt werden. Anschließend kann das Roboterwerkzeug mit dem neuen, hiermit gekoppelten Reinigungselement in Anlage mit der Fahrzeugoberfläche gebracht werden.

Gemäß einer Ausführungsform der Erfindung sind das Reinigungselement (in einem mit dem Roboterwerkzeug gekoppelten Zustand) und die Roboterschnittstelle an unterschiedlichen Seiten des Roboterwerkzeugs (und insbesondere des Grundkörpers) angeordnet. Das Reinigungselement kann z.B. an einer von dem Roboter abgewandten und der Fahrzeugoberfläche zugewandten (bzw. zuwendbare) Vorderseite des Roboterwerkzeugs angeordnet sein. Die Roboterschnittstelle kann hingegen an einer Rückseite des Roboterwerkzeugs angeordnet sein. Diese kann dem Roboter zugewandt und von der zu reinigenden Fahrzeugoberfläche abgewandt sein. Die Seiten, an denen das Reinigungselement und die Roboterschnittstelle angeordnet sind, können im Wesentlichen parallel oder geneigt zueinander verlaufen und können z.B. um einen Winkel von weniger als 90° zueinander geneigt sein.

Eine Weiterbildung der Erfindung sieht vor, dass das Reinigungselement eine der Fahrzeugoberfläche zugewandte Seite aufweist und eine sich orthogonal zu dieser Seite erstreckende Dicke von mehr als einem Zentimeter. Bei der zugewandten Seite kann es sich um eine Vorderseite des Reinigungselements handeln und/oder um eine Außenoberfläche, die mit der Fahrzeugoberfläche in Anlage bringbar ist. Die Dicke kann orthogonal zu dieser Seite bzw. in normaler Richtung relativ zu der entsprechenden Außenoberfläche gemessen werden. Vorzugsweise beträgt die Dicke wenigstens 3 cm, wenigstens 5 cm, wenigstens 8 cm oder wenigstens 10 cm. Hierdurch kann sichergestellt werden, dass das Reinigungselement nach Maßgabe der Kontur der zu reinigenden Fahrzeugoberfläche deformierbar ist und somit selbst bei einer gewölbten Fahrzeugoberfläche großflächig an dieser anliegen kann. Allgemein kann das Reinungselement eine Grundfläche von wenigstens 100 cm² aufweisen.

Das Roboterwerkzeug kann allgemein starr ausgebildet sein (d.h. keine inneren Gelenke umfassen) und/oder starr an dem Roboter angekoppelt werden und somit relativ hierzu im Wesentlichen oder gänzlich unbeweglich sein.

Gemäß einer Variante ist das Reinigungselement gelenkig innerhalb des Roboterwerkzeugs gelagert. Genauer gesagt kann sich das Reinigungselement in einem mit dem Roboterwerkzeug gekoppelten Zustand an wenigstens einem gelenkig innerhalb des Roboterwerkzeugs gelagerten Element abstützen.

Das Reinigungselement kann nach Maßgabe der über die gelenkige Verbindung bzw. Abstützung definierten Freiheitsgrade bewegbar sein, beispielsweise relativ zu der Roboterschnittstelle und/oder zu zumindest einem Bereich des Grundkörpers. Diese Bewegbarkeit kann dazu dienen, eine Anpassung an gewölbte Fahrzeugoberflächen zu ermöglichen, beispielsweise da das Reinigungselement bei einem in Anlage bringen an die entsprechende Fahrzeugoberfläche entsprechend gelenkig nachgeben kann.

Die gelenkige Lagerung kann z.B. durch ein Kugelgelenk, eine nachgiebige (insbesondere federnde) Aufhängung, relativ zu der Fahrzeugoberfläche ein- und ausschwenkbare Elemente (z.B. Platten) oder eine Kombination sämtlicher oder einzelner dieser Maßnahmen bereitgestellt werden. In diesem Zusammenhang (aber auch unabhängig hiervon) kann das Reinigungselement ein Tuch sein, beispielsweise ein Mikrofasertuch, und dieses kann zum Anpassen an die Form der Fahrzeugoberfläche entsprechend gelenkig ausgelenkt und/oder deformiert werden. In diesem Fall ist eine Nachgiebigkeit des Reinigungselements insbesondere in der Weise zu verstehen, dass dieses seine Form und/oder Ausrichtung gegenüber der Fahrzeugoberfläche ändern kann, beispielsweise aufgrund der gelenkigen Lagerung. Insbesondere kann das Tuch auf eine Oberfläche des Roboterwerkzeugs gespannt werden bzw. zumindest abschnittsweise an dieser anliegen und diese Oberfläche kann durch verschwenkbare Elemente gebildet werden (zum Beispiel verschwenkbare Platten) und deshalb nachgiebig sein.

Bei einer bevorzugten erfindungsgemäßen Variante ist das Reinigungselement magnetisch und insbesondere über eine Magnetschnittstelle mit dem Grundkörper gekoppelt oder koppelbar. Insbesondere kann das Reinigungselement einen Dauermagneten aufweisen und/oder ein ferromagnetisches Material. Der Grundkörper kann hingegen einen selektiv magnetisierbaren Magneten umfassen, insbesondere einen Elektromagneten. Die Magnetschnittstelle kann an dem Grundkörper ausgebildet sein und den optionalen Elektromagneten umfassen. Das hiermit zusammenwirkende Magnetmaterial des Reinigungselements kann als von der etwaigen Magnetschnittstelle unabhängig ausgebildet, aber hiermit zusammenwirkend betrachtet werden. Über selektives Aktivieren oder Deaktivieren der Magnetschnittstelle und/oder des Elektromagneten kann das Reinigungselement wahlweise mit dem Grundkörper gekoppelt oder entkoppelt werden, was z.B. einen automatischen Wechsel von Reinigungselementen ermöglicht.

Das weitere nachgiebige und/oder nachgiebig gelagerte und flüssigkeitsabsorbierende Reinigungselement ist vorzugsweise gemeinsam mit dem ersten Reinigungselement mit dem Grundkörper gekoppelt oder koppelbar (und vorzugsweise auch gemeinsam hiermit von dem Grundkörper entkoppelbar).

In diesem Zusammenhang ist ferner vorgesehen sein, dass die Reinigungselemente derart an dem Grundkörper angeordnet oder anordenbar sind, dass bei einem Bewegen entlang einer Fahrzeugoberfläche die Fahrzeugoberfläche zuerst von einem der Reinigungselemente und anschließend von dem anderen der Reinigungselemente überstreichbar ist. Unter einem Überstreichen kann allgemein ein in Anlage stehendes sowie entlang der Fahrzeugoberfläche erfolgendes Bewegen der Reinigungselemente verstanden werden. Anders ausgedrückt kann hierunter ein Abwischen der Fahrzeugoberfläche mit den Reinigungselementen verstanden werden. Um das geschilderte aufeinanderfolgende Überstreichen zu ermöglichen, können die Reinigungselemente entlang einer Achse des Roboterwerkzeugs betrachtet hintereinander angeordnet sein. Hierbei kann es sich insbesondere um eine parallel zum Grundkörper verlaufende Achse handeln und/oder eine parallel zu einer der Fahrzeugoberfläche zugewandten Vorderseite des Roboterwerkzeugs verlaufenden Achse. Diese Variante bietet den Vorteil, dass eines der Reinigungselemente (insbesondere dasjenige, das zuerst die Fahrzeugoberfläche überstreicht) für ein Aufbringen von Reinigungsmitteln eingesetzt werden kann (beispielsweise durch vorheriges Befeuchten, Besprühen oder anderweitiges Absorbieren einer Reinigungsflüssigkeit). Das erst anschließend die Fahrzeugoberfläche überstreichende Reinigungselement kann hingegen dem Aufwischen verbleibender Reinigungsflüssigkeit dienen, beispielsweise indem es zunächst im Wesentlichen trocken ist und somit eine erhöhte Saugfähigkeit für Flüssigkeit aufweist.

Hierdurch kann das Risiko verringert werden, dass Reinigungsflüssigkeit auf der Fahrzeugoberfläche verbleibt, an dieser herunterfließt oder von dieser heruntertropft.

Die Erfindung betrifft ferner eine Roboteranordnung zum Reinigen von Fahrzeugoberflächen mit einem Roboter und einem hiermit gekoppelten oder koppelbaren Roboterwerkzeug nach einem der vorangehenden Ansprüche, wobei der Roboter dazu eingerichtet ist, das Roboterwerkzeug relativ zu einer zu reinigenden Oberfläche zu bewegen. Bei dem Roboter kann es sich um einen Roboter gemäß jeglicher der vorstehend erläuterten Varianten handeln, insbesondere um einen um mehrere Achsen bewegbaren Roboter, beispielsweise einen mehrachsigen Knickarm-Industrieroboter.

Ferner betrifft die Erfindung ein Verfahren zum Betreiben einer Roboteranordnung für das Reinigen von Fahrzeugoberflächen, wobei die Roboteranordnung einen Roboter und ein hiermit gekoppeltes Roboterwerkzeug umfasst, wobei das Roboterwerkzeug wenigstens zwei flüssigkeitsabsorbierende Reinigungselemente umfasst, von den eines zum Aufbringen von Reinigungsflüssigkeit auf die Fahrzeugoberfläche und das andere zum Absorbieren von Reinigungsflüssigkeit von der Fahrzeugoberfläche eingerichtet ist; und wobei das Verfahren umfasst:
- Bewegen des Roboterwerkzeugs durch den Roboter entlang einer Fahrzeugoberfläche, sodass diese zuerst von dem ersten Reinigungselement zum Aufbringen der Reinigungsflüssigkeit überstrichen wird und anschließend von dem zweiten Reinigungselement zum Absorbieren von Reinigungsflüssigkeit.

Zum Aufbringen der Reinigungsflüssigkeit kann das Reinigungselement mit entsprechender Reinigungsflüssigkeit besprüht werden oder besprüht worden sein, in Reinigungsflüssigkeit eingetaucht werden oder eingetaucht worden sein oder, allgemein ausgedrückt, ein Reinigungsflüssigkeitsvolumen absorbieren oder absorbiert haben. Mit anderen Worten kann das Reinigungselement also bereits befeuchtet sein. Das weitere Reinigungselement, das zum Absorbieren von Reinigungsflüssigkeit von der Fahrzeugoberfläche dient (also diese, mit anderen Worten, abtrocknet oder trocken wischt), kann hingegen vor dem Reinigen der Fahrzeugoberfläche nicht oder allenfalls in einem geringen Ausmaße mit einer Reinigungsflüssigkeit in Kontakt gebracht werden. Hierdurch kann eine gegenüber dem anderen Reinigungselement erhöhte Saugfähigkeit beibehalten werden, um die Reinigungsflüssigkeit von der Fahrzeugoberfläche aufzuwischen. Insgesamt kann also vorgesehen sein, dass das Reinigungselement zum Aufbringen der Reinigungsflüssigkeit feuchter als dasjenige zum Absorbieren von Reinigungsflüssigkeit ist, ein größeres Reinigungsflüssigkeitsvolumen als das andere Reinigungselement absorbiert hat und/oder bei einem Bewegen entlang der Fahrzeugoberfläche mehr Reinigungsflüssigkeit abgibt als aufnimmt (insbesondere im Gegensatz zu dem anderen Reinigungselement, für das Gegenteiliges gilt).

Die Verfahren können jeglichen weiteren Schritt und jegliches weitere Merkmal umfassen, um sämtliche der vorstehend erläuterten Betriebszustände, Funktionen und Wechselwirkungen zu ermöglichen. Insbesondere können sämtliche Erläuterungen zu Vorrichtungsmerkmalen auch auf entsprechende Verfahrensmerkmale zutreffen. Allgemein können die Verfahren mit einem Roboterwerkzeug und/oder einer Roboteranordnung gemäß jeglichem der vorstehenden und nachstehenden Aspekte ausgeführt werden. Auch bei den Verfahren können die Reinigungselemente nachgiebig und/oder nachgiebig gelagert sein.

Im Folgenden werden Ausführungsbeispiele der Erfindung anhand der beigefügten schematischen Figuren erläutert. In ihrer Art und/oder Funktion vergleichbare Merkmale können dabei mit den gleichen Bezugszeichen versehen sein. Es stellen dar:
- Fig. 1: eine schematische Darstellung einer Roboteranordnung gemäß einer Ausführungsform der Erfindung; und
- Fig. 2: eine schematische Darstellung eines Roboterwerkzeugs gemäß einem alternativen, nicht-anspruchsgemäßen Ausführungsbeispiel der Erfindung.

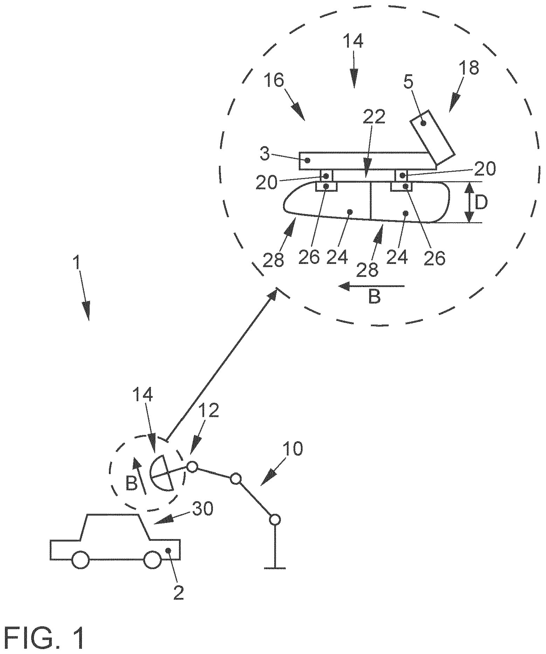

In Fig. 1 ist eine Roboteranordnung 1 gezeigt, die einen 6-Achsen-Knickarm-Industrieroboter 10 gemäß herkömmlicher Bauart umfasst. Die einzelnen Gelenke bzw. ansteuerbaren und mittels Servomotoren angetriebenen Gelenke (bzw. Maschinenachsen) des Roboters 10 sind als kreisförmige Elemente angedeutet, wobei aber nicht alle sechs Gelenke eingezeichnet sind. In Absorbieren bzw. Aufwischen der Reinigungsflüssigkeit von der Fahrzeugoberfläche können gesonderte Bewegungen erfolgen (beispielsweise entgegen der Gravitationsrichtung von unten nach oben, im Vergleich zu mit der Gravitationsrichtung von oben nach unten im Fall des Aufbringens von Reinigungsflüssigkeit). Insbesondere beim Absorbieren der Reinigungsflüssigkeit, aber zusätzlich oder alternativ auch beim Aufbringen der Reinigungsflüssigkeit, ist es auch denkbar, die Bewegungsbahn des Roboters basierend auf Sensorsignalen geeignet anzupassen, um das Absorbieren und/oder Aufbringen der Reinigungsflüssigkeit in gewünschter Weise zu ermöglichen. Auch in diesem Fall kann es vorteilhaft sein, die Reinigungselemente getrennt voneinander entlang der Fahrzeugoberfläche zu bewegen, um nach Maßgabe der Sensorsignale (z.B. von einem Kamerasensor, der über eine Bildauswertung verbleibende Flüssigkeitsvolumen auf der Fahrzeugoberfläche erkennt), die jeweilige Aufgabe des Reinigungselements (Aufbringen oder Absorbieren der Reinigungsflüssigkeit) zu gewährleisten.

Die Verfahren können jeglichen weiteren Schritt und jegliches weitere Merkmal umfassen, um sämtliche der vorstehend erläuterten Betriebszustände, Funktionen und Wechselwirkungen zu ermöglichen. Insbesondere können sämtliche Erläuterungen zu Vorrichtungsmerkmalen auch auf entsprechende Verfahrensmerkmale zutreffen. Allgemein können die Verfahren mit einem Roboterwerkzeug und/oder einer Roboteranordnung gemäß jeglichem der vorstehenden und nachstehenden Aspekte ausgeführt werden. Auch bei den Verfahren können die Reinigungselemente nachgiebig und/oder nachgiebig gelagert sein.

Im Folgenden werden Ausführungsbeispiele der Erfindung anhand der beigefügten schematischen Figuren erläutert. In ihrer Art und/oder Funktion vergleichbare Merkmale können dabei mit den gleichen Bezugszeichen versehen sein. Es stellen dar:
- Fig. 1: eine schematische Darstellung einer Roboteranordnung gemäß einer Ausführungsform der Erfindung; und

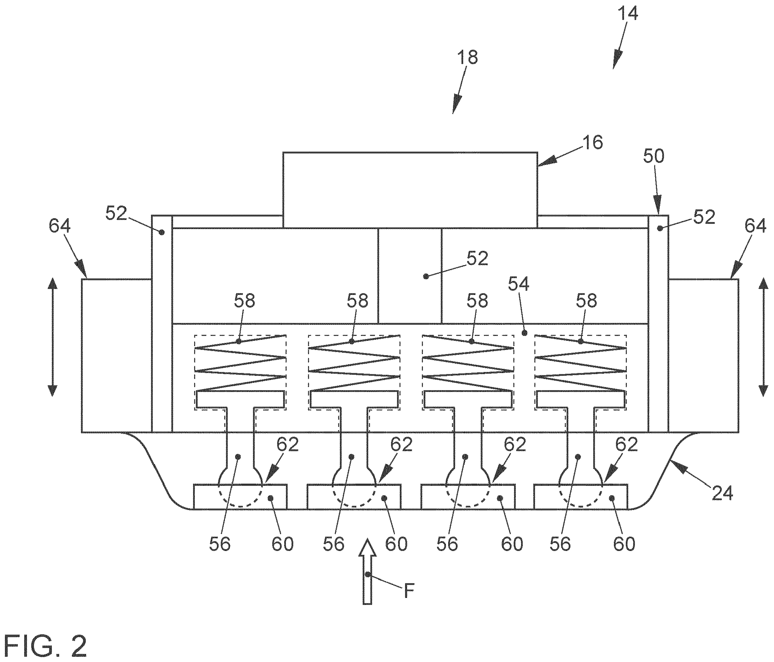

- Fig. 2: eine schematische Darstellung eines Roboterwerkzeugs gemäß einem alternativen Ausführungsbeispiel der Erfindung.

In Fig. 1 ist eine Roboteranordnung 1 gezeigt, die einen 6-Achsen-Knickarm-Industrieroboter 10 gemäß herkömmlicher Bauart umfasst. Die einzelnen Gelenke bzw. ansteuerbaren und mittels Servomotoren angetriebenen Gelenke (bzw. Maschinenachsen) des Roboters 10 sind als kreisförmige Elemente angedeutet, wobei aber nicht alle sechs Gelenke eingezeichnet sind. In an sich bekannter Weise sind die Gelenke über starre Glieder des Roboters 10 miteinander verbunden. Durch Ansteuern der einzelnen Achsen kann ein Handgelenksbereich bzw.

Roboterflansch 12 beliebig und um sämtliche räumlichen Freiheitsgrade im Raum positioniert werden.

An dem Handgelenksbereich 12 ist ein Roboterwerkzeug 14 angeordnet, das in Fig. 1 auch in einer größeren Einzelteilansicht gezeigt ist. Das Roboterwerkzeug 14 weist einen Grundkörper 16 auf. Dieser setzt sich aus einer Trägerplatte 3 für nachstehend erläuterte Reinigungselemente zusammen sowie eine daran angebrachte Adapterplatte 5. Die Adapterplatte 5 weist eine Roboterschnittstelle 18 auf, die nicht gesondert dargestellte Eingriffsstrukturen umfasst. Diese können mit korrespondierenden Eingriffsstrukturen des Handgelenkbereichs 12 des Roboters 10 in Eingriff gebracht werden, um das Roboterwerkzeug 14 mit dem Roboter 10 mechanisch zu koppeln. Die Roboterschnittstelle 18 ist somit an einer dem Roboter 10 bzw. dessen Handgelenkbereichs 12 zugewandten Seite des Grundkörpers 16 ausgebildet.

Die Trägerplatte 3 weist an einer Seite, die allgemein einer zu reinigenden Fahrzeugoberfläche zugewandt bzw. zuwendbar und von der Roboterschnittstelle 18 abgewandt ist, selektiv aktivierbare Elektromagneten 20 auf, die eine Magnetschnittstelle 22 des Roboterwerkzeugs 14 bilden. Zum Aktivieren der Elektromagnete 20 kann das Roboterwerkzeug 14 eine nicht gesondert dargestellte Steuereinheit umfassen, die beispielsweise über die Steuerung des Roboters 10 ansteuerbar ist. Hierfür kann die Roboterschnittstelle 18 auch eine signal- und/oder energieübertragende Kopplung ermöglichen.

An der Magnetschnittstelle 22 sind zwei Reinigungselemente 24 angeordnet und hierdurch mit dem Roboterwerkzeug 14 bzw. dem Grundkörper 16 gekoppelt. Die Reinigungselemente 24 sind jeweils als elastisch deformierbare und somit nachgiebige Reinigungskissen ausgebildet. Sie verfügen über eine Absorptionsfähigkeit bezüglich einer Reinigungsflüssigkeit oder, mit anderen Worten, sind allgemein saugfähig ausgebildet. Beispielsweise sind die Reinigungselemente 24 jeweils schwammartig ausgebildet und/oder aus einem Schaumstoffmaterial hergestellt.

Jedes Reinigungselement 24 umfasst ein ferromagnetisches Material 26, mit dem es an einem der Elektromagneten 20 der Magnetschnittstelle 22 ankoppelbar ist.

Jedes Reinigungselement 24 weist ferner eine der zu reinigenden Fahrzeugoberfläche zugewandte Vorderseite 28 auf. Diese ist von der Roboterschnittstelle 18 abgewandt. Eine sich orthogonal zu der Vorderseite 28 erstreckende Dicke D der Reinigungselemente 24 umfasst jeweils mehrere Zentimeter, z.B. wenigstens 3 cm oder wenigstens 5 cm.

In dem gezeigten Beispiel ist eines der Reinigungselemente 24 für ein Auftragen von Reinigungsmitteln eingerichtet und das andere für ein Absorbieren von Reinigungsmittel (d. h. von einer Reinigungsflüssigkeit), jeweils bezogen auf eine zu reinigende Fahrzeugoberfläche. Bei der Fahrzeugoberfläche handelt es sich in dem gezeigten Beispiel um eine Fensterfläche 30, die beispielsweise durch eine Windschutzscheibe eines Fahrzeugs 2 gebildet wird.

Die Reinigungselemente 24 sind derart an dem Grundkörper 16 angeordnet, dass sie entlang einer Bewegungsachse B entlang der Fensterfläche 30 betrachtet hintereinander angeordnet sind. So wird die Fensterfläche 30 (oder zumindest ein ausgewählter Bereich hiervon) bei einem Bewegen entlang der Bewegungsachse B zuerst von dem in Fig. 1 vorderen Reinigungselement 24 überstrichen (bzw. hiervon abgewischt) und anschließend von dem hinteren Reinigungselement 24. Dabei ist das in Fig. 1 vordere (d.h. linke) Reinigungselement 24 für das Auftragen und das hintere (in Fig. 1 rechte) Reinigungselement 24 für ein Absorbieren des Reinigungsmittels eingerichtet. Folglich kann die Fensterfläche 30 in nur einem Bewegungsvorgang mittels des Reinigungsmittels feucht gewischt bzw. gereinigt und durch das weitere Reinigungselement 24 umgehend getrocknet werden. Dies verhindert eine Verschmutzungsgefahr durch auf der Fensterfläche 30 verbleibendes sowie hieran herunterlaufendes oder herabtropfendes Reinigungsmittel.

Um das Reinigungsmittel mit dem vorderen Reinigungselement 24 aufzubringen, kann dieses Reinigungselement 24 vor einem Ankoppeln an den Grundkörper 16 des Roboterwerkzeugs 14 oder in einem daran angekoppelten Zustand mit Reinigungsmittel befeuchtet werden. Dies kann durch Besprühen an einer nicht gesondert dargestellten Besprühstation erfolgen, in der das Reinigungselement 24 von dem Roboter 10 positioniert wird. Alternativ kann das Reinigungselement 24 in ein Reinigungsflüssigkeitsvolumen eingetaucht werden, was auch in einem Zustand erfolgen kann, in dem das weitere Reinigungselement 24 noch nicht angekoppelt ist und somit trocken bleibt.

Es versteht sich, dass die in Fig. 1 gezeigte Ausführungsform nur beispielhaft ist. Es ist ebenso möglich, lediglich ein Reinigungselement 24 vorzusehen. Insbesondere ist es möglich, zum Reinigen der Fensterfläche 30 verschiedene Reinigungselemente 24 nacheinander anzukoppeln. Beispielsweise kann in einem ersten Arbeitsschritt ein zum Aufbringen einer Reinigungsflüssigkeit dienendes Reinigungselement 24 angekoppelt werden und entlang der Fensterfläche 30 bewegt werden. Anschließend kann dieses Reinigungselement 24 abgekoppelt und ein neues, im Vergleich trockneres Reinigungselement 24 angekoppelt werden. Dieses kann anschließend ebenfalls entlang der Fensterfläche 30 bewegt werden und darauf verbleibendes Reinigungsmittel absorbieren.

In Fig. 2 ist ein alternatives Ausführungsbeispiel eines Roboterwerkzeugs 14 gezeigt, das in gleicher Weise an dem Roboter 10 aus Fig. 1 anbringbar ist und ebenfalls eine in Fig. 1 gezeigte Fensterfläche 30 eines Fahrzeugs 2 reinigen kann.

Das Roboterwerkzeug 14 aus Figur 1 zeichnet sich insbesondere dadurch aus, dass das Reinigungselement 24, das in diesem Fall ein Mikrofasertuch mit geringer Dicke ist, nachgiebig innerhalb des Roboterwerkzeugs 14 gelagert ist. Genauer gesagt stützt es sich an im Roboterwerkzeug 14 nachgiebig gelagerten Elementen ab.

Das Roboterwerkzeug 14 aus Figur 2 umfasst wiederum eine nur schematische angedeutete Roboterschnittstelle 18. Diese ist rückseitig an einem Grundkörper 16 des Roboterwerkzeugs 14 ausgebildet. An dem Grundkörper 16 ist eine optionale Linearachsenanordnung 50 angeordnet. Diese umfasst in Figur 2 vertikal verlaufende Führungsschienen 52, die einen Lagerkörper 54 aufnehmen und vertikal gleitend lagern. Vorzugsweise ist der Lagerkörper 54 in einer gewünschten Vertikalposition feststellbar.

In dem Lagerkörper 54 ist eine Mehrzahl von Stützelementen 56 jeweils über ein Federelement 58 in Form einer Druck- und/oder Spiralfeder aufgenommen. Die Stützelemente 56 stützen sich in Figur 2 in vertikaler Richtung (also in der Richtung, in der auch die Linearführung 52 eine Bewegung ermöglicht) an den Federelementen 58 ab. Bei Einwirken externer Druckkräfte F, die auftreten, wenn das Roboterwerkzeug 14 gegen eine zu reinigende Fahrzeugoberfläche gedrückt wird, können die Stützelemente 56 nach Maßgabe lokal wirkender Druckkräfte und unter Kompression der Federelemente 58 individuell verlagert werden. Es versteht sich, dass dies auch eine Anpassung der Kontur des Reinigungselements 24 an eine gewölbte zu reinigende Fahrzeugoberfläche ermöglicht.

Das Reinigungselement 24 liegt mit seiner von der zu reinigenden Fahrzeugoberfläche abgewandten Innenseite an Plattenelementen 60 an. Vorzugsweise sind diese Plattenelemente 60 jeweils gelenkig (d. h. beweglich) mit einem der Stützelemente 56 gekoppelt. Dies erfolgt über eine Kugelverbindung, die dadurch hergestellt wird, dass kugelförmige Enden der Stützelemente 56 in schematische angedeutete rückseitige Ausnehmungen 62 der Plattenelemente 60 eingreifen. Hierüber wird eine zusätzliche Möglichkeit zur Konturanpassung an die Fahrzeugoberfläche geschaffen, da jedes Plattenelement 60 individuell sowie nach Maßgabe der lokal einwirkenden Druckkräfte F gegenüber dieser Fahrzeugoberfläche ausgelenkt werden kann.

Das Reinigungselement 24 überspannt sämtliche der Plattenelemente 60 und ist an seitlichen Befestigungskörpern 64 auswechselbar fixiert. Die Fixierung kann wiederum magnetisch erfolgen, wofür eine entsprechende (nicht dargestellte) Magnetschnittstelle analog zu dem vorigen Beispiel vorgesehen sein kann. Bei beiden der gezeigten Ausführungsbeispiele können alternativ oder zusätzlich zu einer magnetischen Kopplung auch sogenannte Nadelgreifer verwendet werden, die das Reinigungselement 24 greifen können.

Über die Linearführung 52, Federelemente 58 bzw. Stützelemente 56 und die gelenkig gelagerten Plattenelemente 60 ist das Reinigungselement 24 nachgiebig gelagert. Dabei kann auch vorgesehen sein, lediglich eines dieser Elemente oder beliebige Kombinationen hiervon zwecks nachgiebiger Lagerung vorzusehen. Weiter versteht es sich, dass auch bei dem Ausführungsbeispiel aus Figur 2 ein kissenförmiges Reinigungselement 24 verwendet werden könnte.

### Bezugszeichenliste

- 1: Roboteranordnung
- 2: Fahrzeug
- 3: Trägerplatte
- 5: Adapterplatte
- 10: Roboter
- 12: Handgelenksabschnitt
- 14: Roboterwerkzeug
- 16: Grundkörper
- 18: Roboterschnittstelle
- 20: Elektromagnet
- 22: Magnetschnittstelle
- 24: Reinigungselement
- 26: ferromagnetisches Material
- 28: Vorderseite
- 50: Linearachsenanordnung
- 52: Linearführung
- 54: Lagerkörper
- 56: Stützelement
- 58: Federelement
- 60: Plattenelement
- 62: Ausnehmung
- 64: Befestigungskörper
- D: Dicke
- B: Bewegungsrichtung

## Patentansprüche

1. Roboterwerkzeug (14) für das Reinigen von Fahrzeugoberflächen (30), mit:
- einem Grundkörper (16);
- einer Roboterschnittstelle (18) zum Ankoppeln an einen das Roboterwerkzeug (14) bewegenden Roboter (10); und
- wenigstens einem nachgiebigen und/oder nachgiebig gelagerten sowie flüssigkeitsabsorbierenden Reinigungselement (24);
wobei das Reinigungselement (24) lösbar mit dem Grundkörper (16) gekoppelt oder koppelbar ist,
**dadurch gekennzeichnet, dass**
das Roboterwerkzeug (14) wenigstens eine weiteres nachgiebiges und/oder nachgiebig gelagertes sowie flüssigkeitsabsorbierendes Reinigungselement (24) umfasst,
wobei die Reinigungselemente (24) derart an dem Grundkörper (16) angeordnet oder anordenbar sind, dass bei einem Bewegen entlang einer Fahrzeugoberfläche (30) die Fahrzeugoberfläche (30) zuerst von einem ersten der Reinigungselemente (24) und anschließend von dem zweiten der Reinigungselemente (24) überstreichbar ist,
wobei das erste der Reinigungselemente (24) für ein Aufbringen von Reinigungsflüssigkeit und das zweite der Reinigungselemente (24) für ein Absorbieren der aufgebrachten Reinigungsflüssigkeit eingerichtet ist.

2. Roboterwerkzeug (14) nach Anspruch 1,
wobei die Reinigungselemente (24), wenn sie sich in einem mit dem Roboterwerkzeug (14) gekoppelten Zustand befinden, und die Roboterschnittstelle (18) an unterschiedlichen Seiten des Roboterwerkzeugs (14) angeordnet sind.

3. Roboterwerkzeug (14) nach Anspruch 1 oder 2,
wobei die Reinigungselemente (24) eine der Fahrzeugoberfläche (30) zugewandte Vorderseite (28) und eine sich orthogonal zu dieser Seite erstreckende Dicke (D) von mehr als einem Zentimeter aufweisen.

4. Roboterwerkzeug (14) nach einem der vorangehenden Ansprüche,
wobei sich die Reinigungselemente (24) in einem mit dem Roboterwerkzeug (14) gekoppelten Zustand an wenigstens einem gelenkig innerhalb des Roboterwerkzeugs (14) gelagerten Element abstützen.

5. Roboterwerkzeug (14) nach einem der vorangehenden Ansprüche,
wobei die Reinigungselemente (24) magnetisch mit dem Grundkörper (16) gekoppelt oder koppelbar sind.

6. Roboteranordnung (1) zum Reinigen von Fahrzeugoberflächen (30),
mit einem Roboter (10) und einem hiermit gekoppelten oder koppelbaren Roboterwerkzeug (14) nach einem der vorangehenden Ansprüche,
wobei der Roboter (10) dazu eingerichtet ist, das Roboterwerkzeug (14) relativ zu einer zu reinigenden Fahrzeugoberfläche (30) zu bewegen.

7. Verfahren zum Betreiben einer Roboteranordnung (1) für das Reinigen von Fahrzeugoberflächen (30),
wobei die Roboteranordnung (1) einen Roboter (10) und ein hiermit gekoppeltes Roboterwerkzeug (14) umfasst,
wobei das Roboterwerkzeug (14) wenigstens zwei flüssigkeitsabsorbierende Reinigungselemente (24) umfasst, von denen ein erstes zum Aufbringen von Reinigungsflüssigkeit auf die Fahrzeugoberfläche (30) und ein zweites zum Absorbieren von Reinigungsflüssigkeit von der Fahrzeugoberfläche (30) eingerichtet ist;
und wobei das Verfahren umfasst:
- Bewegen des Roboterwerkzeugs (14) durch den Roboter entlang (10) einer Fahrzeugoberfläche (30), sodass diese zuerst von dem ersten Reinigungselement (24) zum Aufbringen der Reinigungsflüssigkeit überstrichen wird und anschließend von dem zweiten Reinigungselement (24) zum Absorbieren von Reinigungsflüssigkeit.

## Claims

1. Robot tool (14) for cleaning vehicle surfaces (30), having:
- a main body (16);
- a robot interface (18) for coupling to a robot (10) moving the robot tool (14); and
- at least one resilient and/or resiliently supported and liquid-absorbing cleaning element (24);
wherein the cleaning element (24) is or can be releasably coupled to the main body (16),
**characterized in that**
the robot tool (14) comprises at least one further resilient and/or resiliently supported and liquid-absorbing cleaning element (24),
wherein the cleaning elements (24) are or can be arranged on the main body (16) in such a way that during a movement along a vehicle surface (30), the vehicle surface (30) can be swept over firstly by a first of the cleaning elements (24) and then by the second of the cleaning elements (24),
wherein the first of the cleaning elements (24) is set up to apply cleaning liquid and the second of the cleaning elements (24) is set up to absorb the applied cleaning liquid.

2. Robot tool (14) according to Claim 1,
wherein, when they are coupled to the robot tool (14), the cleaning elements (24) and the robot interface (18) are arranged on different sides of the robot tool (14).

3. Robot tool (14) according to Claim 1 or 2,
wherein the cleaning elements (24) have a front side (28) facing the vehicle surface (30) and a thickness (D) of more than one centimetre extending orthogonally to this side.

4. Robot tool (14) according to one of the preceding claims,
wherein, when they are coupled to the robot tool (14), the cleaning elements (24) are supported on at least one element mounted in an articulated manner within the robot tool (14).

5. Robot tool (14) according to one of the preceding claims,
wherein the cleaning elements (24) are or can be coupled magnetically to the main body (16).

6. Robot arrangement (1) for cleaning vehicle surfaces (30),
having a robot (10) and a robot tool (14) according to one of the preceding claims that is or can be coupled thereto,
wherein the robot (10) is set up to move the robot tool (14) relative to a vehicle surface (30) to be cleaned.

7. Method for operating a robot arrangement (1) for cleaning vehicle surfaces (30),
wherein the robot arrangement (1) comprises a robot (10) and a robot tool (14) coupled thereto,
wherein the robot tool (14) comprises at least two liquid-absorbing cleaning elements (24), of which a first is set up to apply cleaning liquid to the vehicle surface (30) and a second is set up to absorb cleaning liquid from the vehicle surface (30);
and wherein the method comprises:
- moving the robot tool (14) by means of the robot (10) along a vehicle surface (30), so that the latter is first swept over by the first cleaning element (24) for applying the cleaning liquid and then by the second cleaning element (24) for absorbing cleaning liquid.

## Revendications

1. Outil de robot (14) pour le nettoyage de surfaces de véhicule (30), comprenant :
- un corps de base (16) ;
- une interface de robot (18) pour le couplage à un robot (10) déplaçant l'outil de robot (14) ; et
- au moins un élément de nettoyage (24) souple et/ou monté de manière souple et absorbant les liquides ;
dans lequel l'élément de nettoyage (24) est ou peut être couplé de manière amovible au corps de base (16),
**caractérisé en ce que** l'outil de robot (14) comprend au moins un autre élément de nettoyage (24) souple et/ou monté de manière souple et absorbant les liquides,
dans lequel les éléments de nettoyage (24) sont ou peuvent être disposés sur le corps de base (16) de telle sorte que lors d'un mouvement le long d'une surface de véhicule (30), la surface de véhicule (30) peut d'abord être balayée par un premier des éléments de nettoyage (24) et ensuite par le deuxième des éléments de nettoyage (24),
dans lequel le premier des éléments de nettoyage (24) est conçu pour appliquer un liquide de nettoyage et le deuxième des éléments de nettoyage (24) est conçu pour absorber le liquide de nettoyage appliqué.

2. Outil de robot (14) selon la revendication 1, dans lequel les éléments de nettoyage (24), lorsqu'ils se trouvent dans un état couplé à l'outil de robot (14), et l'interface de robot (18) est disposée sur différents côtés de l'outil de robot (14).

3. Outil de robot (14) selon la revendication 1 ou 2, dans lequel les éléments de nettoyage (24) présentent une face avant (28) tournée vers la surface de véhicule (30) et une épaisseur (D) de plus d'un centimètre, s'étendant de manière orthogonale par rapport à ce côté.

4. Outil de robot (14) selon l'une quelconque des revendications précédentes, dans lequel les éléments de nettoyage (24), à l'état couplé à l'outil de robot (14), prennent appui sur au moins un élément monté de manière articulée à l'intérieur de l'outil de robot (14) .

5. Outil de robot (14) selon l'une quelconque des revendications précédentes, dans lequel les éléments de nettoyage (24) sont ou peuvent être couplés magnétiquement au corps de base (16).

6. Agencement de robot (1) pour le nettoyage de surfaces de véhicule (30),
comprenant un robot (10) et un outil de robot (14) selon l'une quelconque des revendications précédentes étant ou pouvant être couplé à celui-ci,
dans lequel le robot (10) est conçu pour déplacer l'outil de robot (14) par rapport à une surface de véhicule (30) à nettoyer.

7. Procédé permettant de faire fonctionner un agencement de robot (1) pour le nettoyage de surfaces de véhicule (30),
dans lequel l'agencement de robot (1) comprend un robot (10) et un outil de robot (14) couplé à celui-ci,
dans lequel l'outil de robot (14) comprend au moins deux éléments de nettoyage (24) absorbant les liquides dont un premier est conçu pour appliquer un liquide de nettoyage sur la surface de véhicule (30) et un deuxième est conçu pour absorber le liquide de nettoyage à la surface de véhicule (30) ;
le procédé comprenant :
- le déplacement de l'outil de robot (14) par le robot le long (10) d'une surface de véhicule (30) de sorte que celle-ci est balayée en premier par le premier élément de nettoyage (24) pour appliquer le liquide de nettoyage, et est ensuite balayée par le deuxième élément de nettoyage (24) pour absorber le liquide de nettoyage.
